# EUROPÄISCHE PATENTANMELDUNG

(11) **EP 3 984 370 A1**
(43) Veröffentlichungstag der Anmeldung: **20.04.2022**
(21) Anmeldenummer: 21203280.9
(22) Anmeldetag: 18.10.2021
(51) Int. Cl.: A23D 7/04, A23D 7/06, A23D 9/05, A23D 9/06, A23P 10/25, A23P 10/35

(54) **VERFAHREN ZUR VERKAPSELUNG FESTER UND FLÜSSIGER INHALTSSTOFFE ZU NAHRUNGSMITTELN**

(30) Priorität: 16.10.2020 DE 102020213090
(71) Anmelder: Deutsches Institut für Lebensmitteltechnik e.V., 49610 Quakenbrück (DE)
(72) Erfinder: Volker, Lammers, 49610 Quakenbrück (DE); Pajic, Aleksandar, 49610 Quakenbrück (DE); Rumker von Höven, Matthias, 49610 Quakenbrück (DE); Bommes, Caroline, 49610 Quakenbrück (DE)
(74) Vertreter: Taruttis, Stefan Georg

(57) **Zusammenfassung**

Die Erfindung betrifft ein Verfahren zur Herstellung von mit Fett verkapseltem Inhaltsstoff, das die Schritte
a) Dosieren von Fett, das einen Schmelzpunkt von zumindest 50°C aufweist, in einen Extruder,
b) Erwärmen des Fetts in dem Extruder bei Drehung der zumindest einen Schnecke,
c) Zudosieren zumindest eines Inhaltsstoffs in das Extrudergehäuse zur Herstellung einer fließfähigen Mischung,
d) Kühlen der fließfähigen Mischung in einem stromabwärts angrenzenden Abschnitt des Extrudergehäuses,
e) anschließendes Austreten der Mischung durch eine Extruderdüse und
f) Zerkleinern der Mischung nach Austritt aus der Extruderdüse, aufweist.

## Beschreibung

Die vorliegende Erfindung betrifft ein Verfahren zur Verkapselung, insbesondere von Inhaltsstoffen von Nahrungs- und Futtermitteln, z.B. von Inhaltsstoffen und aktiven Komponenten, insbesondere zur Verwendung in Nahrungsmitteln und Futtermitteln, wobei die Inhaltsstoffe fest oder flüssig sind, insbesondere bei 20°C bis 40°C oder bis 38°C fest oder flüssig sind, sowie die mit dem Verfahren erhältlichen verkapselten Inhaltsstoffe für Nahrungsmittel und Futtermittel. Für die Zwecke der Erfindung umfassen Inhaltsstoffe für Nahrungsmittel auch Mineralstoffe, z.B. Kieselsäure, Vitamine, pflanzliche Bestandteile, z.B. färbende Pflanzenextrakte oder -pulver, z.B. Rote Beete oder Petersilienextrakt, essbare Kohle, insbesondere aus Pflanzen hergestellte Kohle, Mikroorganismen, diese jeweils optional als Pulver, in Lösung, Suspension oder Emulsion, flüssige Stoffe und Zusammensetzungen, z.B. Lösungen und Suspensionen in Wasser, in Öl oder in Emulsion, die z.B. eine Wasser-in-Öl-Emulsion oder eine Öl-in-Wasser-Emulsion sein kann, und Mischungen aus zumindest zweien dieser.

Das Verfahren zeichnet sich dadurch aus, dass im Verhältnis zum Verkapselungsmaterial ein sehr hoher Anteil an Inhaltsstoffen verkapselt wird und das Verfahren mit geringem maschinellen Aufwand durchführbar ist. Die erhältlichen verkapselten Inhaltsstoffe zeichnen sich dadurch aus, dass sie einen geringen Gehalt an Verkapselungsmaterial aufweisen, bei Raumtemperatur stabil sind und ohne Hilfsmittel rieselfähig und leicht dosierbar sind. Optional sind die verkapselten Inhaltsstoffe magensaftresistent, so dass der Inhaltsstoff erst nach Eintritt in den Dünndarm bzw. während der Passage des Dünndarms aus der Verkapselung freigesetzt wird.

Die EP 3 052 571 B1 beschreibt ein für Lebensmittel geeignete temperaturstabile Wasser-in-Öl-Emulsionen mit einem Farbstoff, der bei dem pH-Wert des Lebensmittels bei erhöhter Temperatur instabil ist und der in der wässrigen Phase enthalten ist, mit einem Emulgator in der kontinuierlichen Ölphase, wobei die wässrige Phase auf einen pH-Wert eingestellt ist, bei der der Farbstoff bei der erhöhten Temperatur stabil ist und die wässrige Phase eine mittlere Tröpfchengröße von maximal 1,5 µm in der Ölphase aufweist.

Brodkorb et al, Nature Protocols 2019 (https://doi.org/10.1038/s41596-018-0119-1) beschreiben einen in vitro Test zur Simulation der Verdauung.

Der Erfindung stellt sich die Aufgabe, ein alternatives Verfahren zur Verkapselung von pulverförmigen oder flüssigen Inhaltsstoffen sowie alternativ verkapselte Inhaltsstoffe anzugeben, die einen hohen Anteil der Inhaltsstoffe bei geringem Anteil des Verkapselungsmaterials aufweisen. Bevorzugt soll das Verfahren einfach durchführbar sein und verkapselte Inhaltsstoffe herstellen, die bei Raumtemperatur rieselfähig sind, die leicht dosierbar sind, und die nach dem Verzehr die Inhaltsstoffe erst nach Eintritt in den Dünndarm freisetzen.

Die Erfindung löst die Aufgabe mit den Merkmalen der Ansprüche und stellt insbesondere ein Verfahren zur Herstellung von mit Fett verkapseltem Inhaltsstoff bereit, das die Schritte
a) Dosieren von Fett, das optional eine Fettmischung ist, mit einem Schmelzpunkt von zumindest 50 °C oder zumindest 55 °C, z.B. 50 bis 90 °C, bevorzugt von 55 bis 70 °C, bevorzugter zumindest 60 bis 70 °C, in einen Extruder,
b) bei Drehung der zumindest einen Schnecke des Extruders, Erwärmen des Fetts, z.B. auf eine Temperatur, bei der das Fett fließfähig ist, die z.B. 35 bis 40 K oberhalb der Schmelztemperatur des Fetts liegt, z.B. maximal 30 K oder maximal 25 K oder maximal 20 K oder maximal 10 K oberhalb der Schmelztemperatur des Fetts, optional bis auf maximal die Schmelztemperatur des Fetts, zur Erzeugung fließfähigen Fetts,
c) Zudosierung des Inhaltsstoffes in das Extrudergehäuse, bevorzugt stromabwärts der Fettdosierung oder an der gleichen Stelle wie die Fettdosierung, und Vermischen des Inhaltsstoffes mit dem Fett im Extrudergehäuse zur Herstellung einer fließfähigen Mischung, die das Fett und den Inhaltsstoff enthält oder daraus besteht,
d) Kühlen der fließfähigen Mischung im Extruder auf die Schmelztemperatur des Fetts oder darunter, so dass z.B. eine viskose, aber noch fließfähige Konsistenz erreicht wird, bevorzugt durch Kühlen der Mischung auf eine Temperatur, die in einem Bereich von zumindest 1 K, zumindest 2 K, zumindest 3 K, zumindest 4 K oder zumindest 5 K, bevorzugt zumindest 10 K, bevorzugter zumindest 15 K, bevorzugter zumindest 20 K oder zumindest 25 K oder zumindest 30 K, z.B. 35 bis 40 K unterhalb der Schmelztemperatur des Fetts oder der Mischung liegt,
e) unmittelbar anschließendes Pressen bzw. Extrudieren der Mischung durch eine Extruderdüse, die z.B. Düsenöffnungen mit einem Durchmesser von 250 µm bis 6 mm, bevorzugter 500 µm bis 3 mm oder bis 2 mm oder bis 1 mm aufweist, zur Herstellung zumindest eines Extrudatstranges und,
f) nach Austritt aus der Extruderdüse, Zerkleinern des Extrudatstranges, z.B. durch Schneiden, zur Herstellung von Pellets aus der Mischung,
g) optional anschließendes Trocknen der Pellets, z.B. bis die Oberfläche trocken ist, bevorzugt bei einer Temperatur unterhalb der Schmelztemperatur des Fetts,
h) optional anschließendes Behandeln der Pellets durch Temperieren auf eine Temperatur von zumindest 2 bis 10 K unterhalb der Schmelztemperatur des Fetts und zumindest 50 °C, bevorzugt zumindest 55 °C, bevorzugter zumindest 58 °C, noch bevorzugter zumindest 60 °C, für zumindest 1 d, bevorzugter 3 bis 10 d, z.B. 5 bis 7 d,
aufweist oder daraus besteht.

Generell wird im Verfahren, zumindest während der Schritte a), b), c), d) und e), die zumindest eine Schnecke des Extruders ohne Unterbrechung gedreht.

Optional wird nach dem Erwärmen des Fetts, das in Schritt a) dosiert wird und z.B. einen Schmelzpunkt von zumindest 50 °C aufweist, auf zumindest seine Schmelztemperatur in Schritt b) und vor dem Kühlen der fließfähigen Mischung im Extruder in Schritt d) ein niedrigschmelzendes Fett in den Extruder dosiert. Das niedrigschmelzende Fett wird bevorzugt zu maximal 20 Gew.-%, bevorzugter zu maximal 19 Gew.-%, zu maximal 18 Gew.-%, zu maximal 17 Gew.-%, noch bevorzugter zu maximal 16 Gew.-% der Summe der Fette zudosiert. Dabei wird das niedrigschmelzende Fett z.B. zu zumindest 5 Gew.-% oder zumindest 10 Gew.-% oder zumindest 12 Gew.-% der Summe der Fette zudosiert. Die Summe der Fette ist die Masse des in Schritt a) dosierten Fetts z.B. mit einem Schmelzpunkt von zumindest 50 °C, und des niedrigschmelzenden Fetts. Das niedrigschmelzende Fett hat einen Schmelzpunkt von maximal 40 °C, bevorzugt von maximal 39 °C, von maximal 38 °C oder von maximal 37 °C, maximal 36 °C oder maximal 35 °C. Optional kann das niedrigschmelzende Fett eines sein, das bei Raumtemperatur flüssig ist, z.B. ungehärtetes Pflanzenöl.

Das Fett, das in Schritt a) dosiert wird, wird bevorzugt als Feststoff, z.B. als Pulver oder Granulat, in den Extruder dosiert. Das niedrigschmelzende Fett wird bevorzugt flüssig in den Extruder dosiert.

Gegenwärtig wird angenommen, dass der Inhaltsstoff erst nach Passieren des Magens im Dünndarm durch Lipasen freigesetzt wird, weil die Schmelztemperatur des Fetts über der Körpertemperatur von Menschen, Nutztieren und Haustieren liegt. Daher ist der Inhaltsstoff bevorzugt einer, der in Magensäure instabil ist bzw. durch Magensäure beeinträchtigt bzw. zersetzt wird, und/oder der erst im Dünndarm freigesetzt werden soll. Bevorzugt finden die Pellets Verwendung als Nahrungsmittel für Menschen oder monogastrische Tiere, insbesondere monogastrische Nutztiere oder Haustiere. Bei Dosierung eines niedrigschmelzenden Fetts in den Extruder konnten Pellets hergestellt werden, die das niedrigschmelzende Fett enthalten und dennoch erst nach einer Zeit und Temperatur, die der Passage in den Dünndarm entspricht, den Inhaltsstoff freisetzen. Es wird angenommen, dass das niedrigschmelzende Fett das Auflösen des Fetts, das in Schritt a) dosiert wird und z.B. einen Schmelzpunkt von zumindest 50 °C hat, bechleunigt.

Es hat sich gezeigt, dass bei der Zudosierung eines niedrigschmelzenden Fetts nach Schritt b) und vor Schritt d) trotz des Gehalts an niedrigschmelzendem Fett eine bei Raumtemperatur feste partikelförmige Mischung hergestellt wird. Diese partikelförmige Mischung, auch als Pellets bezeichnet, wird im Intestinaltrakt, insbesondere im Dünndarm, von Säugetieren und Menschen zersetzt und gibt den Inhaltsstoff frei. Es hat sich gezeigt, dass durch Wahl der Art und des Anteils des niedrigschmelzenden Fetts die Freisetzung des Inhaltsstoffs vorbestimmt werden kann.

Das Mischen von Fett, das einen Schmelzpunkt von zumindest 50 °C aufweist, mit dem zumindest einen Inhaltsstoff kann optional, z.B. für einen Anteil oder das gesamte Fett, das den Schmelzpunkt von zumindest 50 °C aufweist, und den gesamten Inhaltsstoff, vor dem Extrudieren erfolgen, z.B. in einem Mischer, der ein Pulvermischer oder ein Extruder sein kann, oder das Mischen kann durch gleichzeitiges Zuführen des Fetts und des Inhaltsstoffs in den Extruder erfolgen, in dem die Mischung extrudiert wird. Insbesondere in der Ausführungsform, in der das Mischen des Fetts mit Inhaltsstoff in einem Extruder erfolgt, kann das Fett eine Temperatur oberhalb seiner Schmelztemperatur aufweisen oder eine Temperatur bei oder unterhalb seiner Schmelztemperatur. Ein Mischer oder Extruder, in dem das Fett mit dem Inhaltsstoff gemischt wird, kann als ein stromaufwärts angeordneter Abschnitt des Extruders ausgebildet sein, in dem die Mischung anschließend extrudiert wird. Entsprechend können im Verfahren die Schritte a) und c), bevorzugt a), b) und c) gleichzeitig erfolgen.

Die Fettdosierung des Fetts in Schritt a), das bevorzugt einen Schmelzpunkt von zumindest 50 °C aufweist, erfolgt bevorzugt am Einlassende des Extruders, optional kann die Zudosierung des Inhaltsstoffes im Bereich des Einlassendes des Extruders oder stromabwärts davon erfolgen. Generell dreht die zumindest eine Schnecke des Extruders kontinuierlich während des Verfahrens, z.B. bei gleicher oder veränderlicher Drehzahl.

Das Erwärmen der Mischung beim Extrudieren erfolgt bevorzugt durch Temperieren des Extruders in einem ersten Extruderabschnitt, z.B. durch Erwärmen des Extrudermantels und/oder der Schnecke entlang eines ersten Extruderabschnitts, sowie durch das Drehen der zumindest einen Schnecke des Extruders. Optional ist der erste Extruderabschnitt nicht temperiert, so dass das Erwärmen der Mischung überwiegend oder im Wesentlichen ausschließlich durch mechanischen Energieeintrag der Extruderschnecke erfolgt. Das an die Erzeugung einer fließfähigen Mischung anschließende Kühlen erfolgt bevorzugt innerhalb desselben Extruders in einem zweiten Extruderabschnitt und einem optionalen dritten Extruderabschnitt, die z.B. unmittelbar stromabwärts an den ersten Extruderabschnitt angrenzen. Für das Kühlen wird der zweite Extruderabschnitt und der optionale dritte Extruderabschnitt gekühlt, insbesondere der Mantel und/oder die Schnecke entlang des zweiten und/oder dritten Extruderabschnitts. Der zweite Extruderabschnitt und/oder der dritte Extruderabschnitt kann z.B. auf 10 °C bis 0 °C gekühlt werden, z.B. auf eine Temperatur von bis zu 70 K, von bis zu 35 K, von bis zu 30 K, von bis zu 25 K oder bis zu 20 K unterhalb der Schmelztemperatur des Fetts, das in Schritt a) dosiert wurde, bevorzugt unterhalb der Schmelztemperatur der fließfähigen Mischung, gekühlt werden.

Bevorzugt erfolgt die Kühlung des zweiten Extruderabschnitts im Gegenstrom zur Förderrichtung des Extruders. Optional kann der zweite und/oder der dritte Extruderabschnitt gekühlt werden, um die Mischung im Anschluss an den Austritt aus der Extruderdüse auf eine Temperatur, die maximal 35 K, maximal 30 K, maximal 25 K oder maximal 20 K unterhalb der Schmelztemperatur der fließfähigen Mischung oder unterhalb der Schmelztemperatur des in Schritt a) dosierten Fetts liegt, zu bringen. Denn es hat sich gezeigt, dass die Mischung auch bei einer Temperatur unterhalb der Schmelztemperatur mittels des Extruders durch die Düse gepresst wird und sofort anschließend fest ist. Das Zerkleinern erfolgt bevorzugt unmittelbar nach Austritt der Mischung aus der Düse.

Die mit dem Verfahren hergestellte Mischung, die das in Schritt a) dosierte Fett und den Inhaltsstoff, optional niedrigschmelzendes Fett enthält oder daraus besteht, wird auch als mit Fett verkapselter Inhaltsstoff bezeichnet und kann auch als Fettkapsel bezeichnet werden.

Generell kann die Schmelztemperatur der fließfähigen Mischung die Schmelztemperatur des in Schritt a) dosierten Fetts sein, insbesondere für die Zwecke der Temperierung im Verfahren. Die Schmelztemperatur von Fett oder der Mischung wird aus dem Schmelzbereich bestimmt, der mittels Differentialscanningkalorimetrie (DSC) bestimmt wird. Entsprechend ist bevorzugt die Schmelztemperatur der mittels DSC bestimmte Schmelzbereich.

Das Zerkleinern der Mischung erfolgt unmittelbar nach Austritt der Mischung aus dem Extruder, wobei die Temperatur, auf die die Mischung gekühlt wurde, eine Viskosität einstellt, die den Durchtritt durch eine Formungseinheit, z.B. aus einer Lochplatte, bevorzugt in Kombination mit einer Schneideinrichtung, zulässt. Die Schneideinrichtung kann z.B. rotierende Messer aufweisen, z.B. 2 bis 6 Messer, die mit 100 bis 1500 Upm stromabwärts angrenzend an der Extruderdüse, die z.B. eine Lochplatte ist, entlanglaufen.

Da die Temperatur, auf die die Mischung gekühlt wurde, wenn sie aus der Extruderdüse austritt, um 1 bis 50 K, z.B. bis 40 K oder bis 30 K, z.B. um 5 bis 25 K oder 10 bis 20 K, unterhalb der Schmelztemperatur des Fetts oder der Mischung ist, erstarrt die Mischung nach Durchtritt durch die Formungseinheit bereits ohne oder bei geringer weiterer Kühlung. Die Fließfähigkeit der Mischung auch bei einer Temperatur unterhalb ihrer Schmelztemperatur, z.B. um 20 K oder 10 K bis 1 K unterhalb ihrer Schmelztemperatur, wird gegenwärtig darauf zurückgeführt, dass die Mischung im Extruder unter Druck steht und kontinuierlich geschert wird. Entsprechend ist generell bevorzugt, dass die Mischung im Extruder kontinuierlich geschert wird, z.B. durch kontinuierliche Drehung der Schnecke. Die aus dem Extruder ausgetretene Mischung erstarrt sofort und bildet, insbesondere nach der Zerkleinerung, Stückchen, die vorliegend auch als Pellets bezeichnet werden, und die bei einer Temperatur unterhalb der Schmelztemperatur des Fetts schüttfähig bzw. rieselfähig sind und daher leicht dosierbar und in Lebensmittel einmischbar sind. Die Pellets weisen die Mischung aus dem mit Fett verkapselten Inhaltsstoff auf oder bestehen daraus.

Beim optionalen Schritt h), dem Behandeln der Pellets durch Temperieren, kann auf eine Temperatur temperiert werden, die zumindest 2 bis 10 K unterhalb der Schmelztemperatur des Fetts liegt, das einen Schmelzpunkt von zumindest 50 °C oder zumindest 55 °C, z.B. 50 bis 90 °C, bevorzugt von 55 bis 70 °C, bevorzugter zumindest 60 bis 70 °C aufweist.

Das Verfahren hat den Vorteil, ein Produkt in Form von Pellets herzustellen, die eine hohe Beladung an Inhaltsstoff aufweisen, z.B. für festen Inhaltsstoff, stellvertreten durch feinverteilte Pflanzenkohle, pulverförmiges Eigelb, oder flüssigen Inhaltsstoff, z.B. flüssiges Eigelb oder eine wässrige Mischung oder eine Emulsion eines Pflanzenextrakts, z.B. von Roter Beete oder Petersilie, einen Gehalt von zumindest 5 Gew.-%, zumindest 10 Gew.-%, zumindest 20 Gew.-%, zumindest 30 Gew.-%, zumindest 40 Gew.-% oder zumindest 50 Gew.-%, z.B. bis zu 60 Gew.-%, Rest Fett.

Beim Mischen zumindest eines Anteils des Fetts, das in Schritt a) dosiert wird, mit dem Inhaltsstoff, bevor diese in den Extruder dosiert werden, ist das Fett flüssig, bevorzugt pulverförmig, und der Inhaltsstoff ist pulverförmig oder flüssig.

Generell sind das Fett und die Inhaltsstoffe für die Ernährung von Mensch oder Tier geeignet, insbesondere lebensmittelgeeignet, bevorzugt natürlichen Ursprungs. Das Fett kann aus nur einer Verbindung oder einer Mischung von zumindest zwei Verbindungen bestehen. Bevorzugt ist das Fett pflanzlichen Ursprungs. Das Fett kann freie Fettsäure, optional als Salz, Monofettsäureglycerid, Difettsäureglycerid und/oder Trifettsäureglycerid und/oder Wachs, oder eine Mischung aus zumindest zweien dieser, bevorzugt gesättigt, sein. Die freie Fettsäure, die bevorzugt gesättigt ist, oder deren Salz kann eine Kettenlänge von z.B. 10 bis 24 C-Atomen, z.B. 12 bis 18 C-Atome aufweisen, Wachs kann aus zumindest einer C₆- bis C₁₆ -Fettsäure, die mit zumindest einem C₂- bis C₄-Alkohol verestert ist, bestehen.

Ein bevorzugtes Fett, das in Schritt a) dosiert wird, weist durch Hydrieren gehärtetes Pflanzenfett auf oder besteht daraus, z.B. gehärtetes Kokosfett, gehärtetes Palmfett, gehärtetes Rapsfett, gehärtetes tierisches Fett oder eine Mischung aus zumindest zweien dieser. Das gehärtete tierische Fett ist bevorzugt hydriertes Fischöl.

Fett, das in Schritt a) dosiert wird, hat bevorzugt einen Schmelzbereich von 60 bis 90 °C, bevorzugter 60 bis 70 °C, und ist durch vollständiges Hydrieren gehärtet, z.B. Rapsöl, Rübenöl, Sonnenblumenöl, Palmöl, Palmkernfett, Palmkernöl, Rizinusöl, Maiskaimöl, Erdnussöl, Sojaöl, Weizenkeimöl, Olivenöl, Fischöl, Milchfett, jeweils vollständig hydriert, oder eine Mischung aus zumindest zweien dieser.

Das niedrigschmelzende Fett ist nicht hydriert und kann einfach oder mehrfach ungesättigt sein, z.B. Kokosfett, Palmkernfett, Palmfett, Milchfett, Pflanzenöl, z.B. Rapsöl, Olivenöl, Leinöl, Sonnenblumenöl, Hanföl, Erdnussöl, Walnussöl, Weizenkeimöl, Palmöl, Palmkernöl, Distelöl, Sesamöl, Baumwollsamenöl, oder eine Mischung von zumindest zweien dieser.

Das Behandeln der Pellets durch Temperieren auf eine Temperatur von zumindest 2 bis 10 K unterhalb der Schmelztemperatur des in Schritt a) dosierten Fetts und zumindest 50 °C in Schritt h) kann direkt nach Schritt f) oder nach Schritten f) und g) erfolgen. Bevorzugt werden die Pellets vor Schritt h) in Verpackungen abgefüllt, die bevorzugt luftdicht sind, z.B. elastische Beutel aus Kunststoff. Das Behandeln der Pellets in Schritt h) führt zu einer signifikanten Reduktion des Keimgehalts, insbesondere von Bakterien. Überraschender Weise hat sich gezeigt, dass diese Behandlung zur Verringerung des Keimgehalts führt, während die Form und die Qualität der Pellets im Wesentlichen unverändert bleibt. Auch die Qualität bzw. biologische Aktivität des in den Pellets enthaltenen Inhaltsstoffs blieb durch diese Behandlung im Wesentlichen unverändert.

Der Inhaltsstoff kann aus einer Substanz oder einer Mischung von zumindest zwei Substanzen bestehen. Der Inhaltsstoff kann bei der Schmelztemperatur des in Schritt a) dosierten Fetts, bevorzugt bei der Temperatur, auf die während des Verfahrens, z.B. in Schritt b), maximal erwärmt wird, fest oder flüssig sein, und der Inhaltsstoff kann eine Lösung, z.B. in Wasser und/oder Ethanol, oder eine Suspension oder Emulsion sein. Eine Emulsion oder eine Suspension kann bei Raumtemperatur oder der Schmelztemperatur des Fetts flüssig oder fest sein, und kann mit Wasser mischbar sein. Eine Emulsion oder eine Suspension kann zumindest eine Substanz, optional mit einem Emulgator, in einem zweiten Fett verteilt aufweisen, das einen niedrigeren Schmelzpunkt aufweist als das zur Verkapselung eingesetzte Fett. Bevorzugt ist der Inhaltsstoff frei von organischen Lösungsmitteln, ausgenommen Ethanol. Für einen Inhaltsstoff, der bei der Schmelztemperatur des Fetts fest ist, ist bevorzugt, dass er im Produkt eine Partikelgröße von maximal 500 µm oder maximal 50 µm, z.B. eine Partikelgröße von 50 bis 500 µm, aufweist. Dabei kann der Inhaltsstoff diese Partikelgröße bereits beim Mischen mit dem Fett aufweisen, oder der Inhaltsstoff weist beim Mischen mit dem Fett eine größere Partikel größe auf und wird beim Durchtritt durch den Extruder zerkleinert. Bevorzugt weist der Inhaltsstoff vor dem Mischen eine Partikelgröße auf, die geringer als der Durchmesser der Düsenöffnungen der an den Extruder angeschlossenen Düse ist.

Der Extruder kann genau eine Schnecke aufweisen oder kann zwei oder mehr Schnecken aufweisen, z.B. ein Doppelschneckenextruder oder Planetwalzenextruder sein. Optional weist der Extruder einen am Einlassende angeordneten Abschnitt auf, der zum Zerkleinern von Feststoffen eingerichtet ist, z.B. mit einem geringeren Spalt zwischen Schnecke und Stator als in einem anschließenden ersten Abschnitt und/oder als im daran anschließenden zweiten Abschnitt.

Optional weist der Extruder einen als Planetwalzenextruder ausgebildeten Abschnitt auf, z.B. als am Einlassende angeordneten Abschnitt, der zum Zerkleinern von Feststoffen eingerichtet ist, als ersten Abschnitt und/oder als zweiten Abschnitt. Der Planetwalzenextruder hat den Vorteil einer sehr genauen Temperaturführung bei geringem Energieeintrag, die vorteilhaft für temperatur- und schersensible Inhaltsstoffe sein kann.

Die Erfindung wird nun genauer anhand von Beispielen mit Bezug auf die Figuren beschrieben, die in
- Fig. 1 schematisch einen für das Verfahren bevorzugt verwendeten Extruder,
- Fig. 2 die Freisetzung über die Zeit erfindungsgemäß verkapselten Rote Beete-Pulvers und in
- Fig. 3 die gesamte Freisetzung erfindungsgemäß verkapselten Rote Beete-Pulvers zeigen.

### Beispiel 1: Herstellung eines mit Fett verkapselten Inhaltsstoffs

Als Inhaltsstoff wurde Pflanzenkohle, die bevorzugt gemahlen und feinteilig war, eingesetzt. Diese pulverförmige Pflanzenkohle wurde mit pulverförmigem gehärtetem Rapsöl als Fett, Schmelztemperatur 65-70°C, bei Raumtemperatur zu einer Pulvermischung aus je 50 Gew.-% Fett und Inhaltsstoff durch Rühren gemischt. Diese Pulvermischung wurde dem Einlassende eines Doppelschneckenextruders (Typ 44, Bühler AG zugeführt, dessen an das Einlassende anschließender erster Statorabschnitt einen Doppelmantel aufwies, der mit Temperiermedium einer Temperatur von 57 °C temperiert wurde und dessen daran stromabwärts anschließender zweiter Statorabschnitt einen Doppelmantel aufwies, der zum Kühlen mit Temperiermedium einer Temperatur von 35 °C temperiert wurde. Als Temperiermedium wurde 1: 1 Glykol:Wasser verwendet. Die Temperierung des ersten Statorabschnitts mit Temperiermedium reichte bei der durch die Drehung der Schnecken eingebrachten Energie zum Aufschmelzen des Fetts aus, so dass sich eine optisch homogene Mischung bildete. Der zum Kühlen mit Temperiermedium einer Temperatur von 35°C, also unterhalb der Schmelztemperatur, temperierte zweite Statorabschnitt führte bei der Fördergeschwindigkeit von 23,7 kg/h zur Kühlung der fließfähigen Mischung auf eine Temperatur von 41,9 °C, gemessen unmittelbar nach dem Austritt der Mischung, so dass die Mischung im Extruder fließfähig und hochviskos war. Das Auslassende des zweiten Statorabschnitts wurde als Düse von einer Lochplatte, 4 Löcher mit 2,6 mm Durchmesser, überdeckt, an deren Austrittsseite Messer rotierend entlanggeführt wurden, die austretende Mischung zu Pellets schnitten. Bei Raumtemperatur waren die Pellets fest und hatten eine gleichmäßige, geschlossene Oberfläche.

Die Pellets konnten ohne Weiteres auch aus 60 Gew.-% der Pflanzenkohle und 40 Gew.-% des Fetts hergestellt werden.

### Beispiel 2: Herstellung eines mit Fett verkapselten Inhaltsstoffs

Als Inhaltsstoff wurde Eigelbpulver verwendet, das mit gehärtetem Pflanzenfett,

Schmelztemperatur 65-70°C, zu je 50 Gew.-% bei Raumtemperatur chargenweise zu einer Pulvermischung gemischt wurde. Diese Vormischung wurde in das Einlassende eines Doppelschneckenextruders (Typ 44, Bühler) eindosiert. Das Extrudergehäuse wurde in einem ersten Abschnitt, der an das Einlassende angrenzt, auf 70°C temperiert, in einem anschließenden zweiten Abschnitt auf 30°C und in einem an die Düse angrenzenden dritten Abschnitt auf 5°C temperiert. Dabei strömte das Temperiermedium (1:1 Glykol:Wasser) im ersten und zweiten Abschnitt im Gleichstrom zur Förderrichtung des Extruders, im dritten Abschnitt im Gegenstrom. Die eindosierte Vormischung verflüssigte sich im ersten Abschnitt bei Drehung (ca. 100 Upm) der Schnecken. Die aus der Düsenplatte austretenden Extrudatstränge hatten eine Temperatur von ca. 30°C und wurden mittels rotierender Messer zu Pellets geschnitten. Es wird angenommen, dass die Drehung der Schnecken und der dadurch im Extruder gemessene Druck von 14,7 bar ausreichte, um auch bei einer Temperatur der Mischung unterhalb der Schmelztemperatur des Fettes die Mischung hinreichend plastisch bzw. fließfähig zu halten, dass sie durch die Düse gefördert werden konnte.

Alternativ wurde das Eigelbpulver zu 60 Gew.-% mit 40 Gew.-% des Fetts (Schmelzpunkt 65-70°C) zu einer pulverigen Vormischung gemischt. Der an die Einlassöffnung angrenzende erste Abschnitt des Extruders wurde auf 60°C temperiert, der stromabwärts anschließende zweite Abschnitt auf 25°C, und der anschließende dritte Abschnitt, an den sich die Düsenplatte aus Extruderdüse anschließt, wurde auf 0°C temperiert. Das Temperiermedium strömte im ersten und zweiten Abschnitt im Gleichstrom zur Förderrichtung des Extruders, im dritten Abschnitt im Gegenstrom. Optional war zwischen dem ersten Abschnitt und dem Einlassende noch ein zusätzlicher Extruderabschnitt angeordnet, der nicht temperiert war. Dieser zusätzliche Extruderabschnitt scheint keinen wesentlichen Einfluss zu haben. Unmittelbar nach Austritt aus der Düsenplatte wurde für die Extrudatstränge aus der Mischung eine Temperatur von 24,3°C gemessen, ca. 40 bis 45 K unterhalb der Schmelztemperatur des Fetts. Der Druck im Extruder betrug ca. 16 bis 17 bar.

Das jeweilige pelletförmige Produkt aus in dem Fett verkapseltem trockenen Eigelb war gegen Feuchtigkeit stabil und schüttfähig.

### Beispiel 3: Herstellung eines mit Fett verkapselten flüssigen Inhaltsstoffs

Als Beispiel für einen mit Wasser mischbaren flüssigen Inhaltsstoff wurde eine mit Wasser mischbare Emulsion von Roter Beete eingesetzt, die gemäß EP 3 052 571 B1 hergestellt wurde. 56 Gew.-% Rote-Beete-Pulver wurde in Wasser bei 60°C eingemischt, der pH dieser wässrigen Phase auf 4,4 eingestellt, die Ölphase wurde aus Sonnenblumenöl mit 0,3 Gew.-% Lysophosphatidylcholin, 1,85 Gew.-% Phosphatidylcholin, 1,0 Gew.-% Phosphatidylethanolamin, 0,3 Gew.-% Phosphoinositol (zusammenfassend als E322 bezeichnet), 0,7 Gew.-% Polyglycerin-Polyricinoleat (E476) und 2,5 Gew.-% Citronensäureester von Speisefettsäuren (E472c) gemischt, mit anschließendem Temperieren der wässrigen Phase mit der Ölphase auf 45°C und Mischen im Gewichtsverhältnis wässrige Phase : Ölphase von 70:30, Dispergieren zur Voremulsion mittels eines Rotor-Stator-Systems bei 500 bis 800 Upm mit anschließendem Feindispergieren mit einem Ultra-Turrax bei 22000 Upm für 2 min und/oder mit einem Hochdruckhomogenisator zweistufig bei 80 bis 200 bar / 50 bar.

Der Extruder von Beispiel 2 wurde im ersten Abschnitt auf 70°C temperiert, im zweiten Abschnitt auf 37°C und im dritten Abschnitt auf 20°C, wobei das Temperiermedium im ersten und zweiten Extruderabschnitt im Gleichstrom, im dritten Extruderabschnitt im Gegenstrom zur Förderrichtung des Extruders (Drehzahl der Schnecken 100 Upm) durch den Doppelmantel des Extrudergehäuses strömte. Das Fett, Schmelztemperatur 65-70°C, wurde als Pulver oder stückig in das Einlassende am ersten Abschnitt des Extruders zu 30 kg/h eindosiert. Der Inhaltsstoff in Form der mit Wasser mischbaren Emulsion wurde an einem Dosierstutzen stromabwärts des Einlassendes im ersten Abschnitt des Extruders kontinuierlich zu 7,7 kg/h zugepumpt. Innerhalb des Extruders wurde ein Druck von 11,3 bar gemessen, die Temperatur der Mischung nach Austritt aus der Düsenplatte war 31°C. Die aus der Düsenplatte austretenden Extrudatstränge der Mischung wurden mit dem rotierenden Schneidmesser in Pellets geschnitten.

Der Extruder war bis auf den Einlass und den an der Düsenplatte angeschlossenen Auslass geschlossen, so dass beim Verfahren kein Wasser aus der Mischung bzw. aus dem flüssigen Inhaltsstoff austreten konnte.

Die Pellets wiesen die für Rote Beete charakteristische dunkel-violette Farbe auf, waren schüttfähig und äußerlich trocken.

Dieses Beispiel zeigt, dass das Verfahren auch für die Herstellung von verkapselten Inhaltsstoffen geeignet ist, die bei Raumtemperatur flüssig und mit Wasser mischbar sind, bzw. die wässrig und bei Raumtemperatur flüssig sind.

### Beispiel 4: Herstellung eines mit Fett verkapselten flüssigen Inhaltsstoffs

Als Beispiel für einen flüssigen Inhaltsstoff wurde Flüssigeigelb verwendet, als Fett Pflanzenfett (Schmelztemperatur 65-70°C). Der Doppelschneckenextruder (Typ 44, Bühler) wurde in einem an das Einlassende angrenzenden ersten Abschnitt auf 60°C temperiert, in dem stromabwärts angrenzenden zweiten Abschnitt auf 10°C und in dem daran stromabwärts angrenzenden dritten Abschnitt auf 0°C. Im ersten und zweiten Abschnitt strömte das Temperiermedium in derselben Richtung wie die Förderrichtung des Extruders, im dritten Abschnitt strömte das Temperiermedium im Gegenstrom zur Förderrichtung des Extruders. Zwischen dem Einlassende und dem ersten Abschnitt des Extruders war optional ein nicht temperierter Extruderabschnitt angeordnet. Das Fett wurde bei Raumtemperatur als Feststoff, pulverförmig oder stückig, zu 30 kg/h in das Einlassende dosiert. Das flüssige Eigelb wurde kontinuierlich mittels einer Exzenterschneckenpumpe durch einen Anschlußstutzen in den zweiten Abschnitt des Extruders zu 10,5 kg/h dosiert. Die Schnecken wurden zu 100 Upm angetrieben.

Die als Extrudatstrang aus der Düsenplatte austretende Mischung war optisch homogen und hatte eine Temperatur von ca. 19-20°C und damit etwa 45 bis 50 K unterhalb der Schmelztemperatur des Fetts. Im Extruder wurde ein Druck von ca. 11 bar gemessen.

Dieses Beispiel zeigt, dass das Verfahren zur Herstellung von mit Fett verkapselten flüssigen Inhaltsstoffen geeignet ist, die mit Wasser mischbar sind. Weiterhin zeigt dieses Beispiel, dass das Verfahren zur Herstellung von mit Fett verkapselten flüssigen Inhaltsstoffen geeignet ist, die mit flüssigem Fett mischbar sind, hier wegen der Wirkung des Eigelbs, bzw. dessen Phospholipiden, als Emulgator.

Optional wurden die Pellets anschließend bei Raumtemperatur nachgetrocknet, bis sie oberflächlich trocken waren.

Bevorzugt wurden Pellets, insbesondere wenn sie als Inhaltsstoff festes oder flüssiges Eiprodukt enthielten, in luftdichte Kunststoffbeutel als Verpackung gefüllt und durch Temperieren für 3 bis 7 d (Tage) bei 50 bis 60 °C, insbesondere bei 58 °C behandelt. Dabei wies das Fett eine höhere Schmelztemperatur auf, z.B. von ca. 65 - 70 °C.

### Beispiel 5: Herstellung eines mit Fett und niedrigschmelzendem Fett verkapselten Inhaltsstoffs

Als Inhaltsstoff wurde 10 Gew.-% Rote Beete-Pulver mit 90 % Fett, das aus hydriertem Rapsöl (Schmelzpunkt 65-70°C) und einem niedrigschmelzenden Fett bestand, extrudiert. Als niedrigschmelzendes Fett wurde Rapsöl (flüssig bei Raumtemperatur von 20 °C), Palmkernfett (Schmelzpunkt 22 bis 26 °C) oder Kokosfett (Schmelzpunkt 23 bis 26 °C oder 22 bis 26 °C) zu 6, 12 oder 16 Gew.-% zudosiert, bezogen auf die Summe aus hydriertem Rapsöl und niedrigschmelzendem Fett.

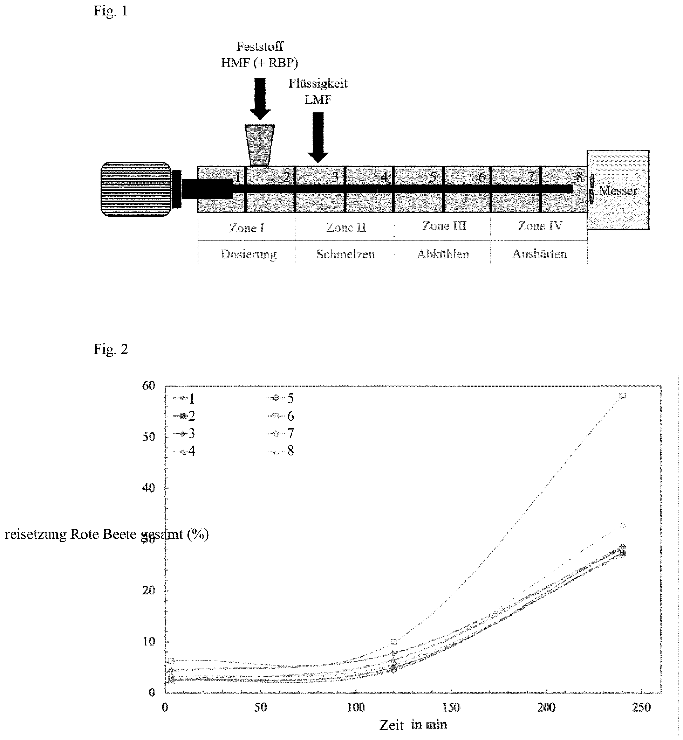

Für die Extrusion wurde ein Extruder eingesetzt, der wie in Fig. 1 gezeigt in 4 Zonen unterschiedlich temperiert war. Das Extrudergehäuse was aus 8 Segmenten zusammengesetzt, die Schnecke erstreckte sich über die gesamte Länge des Gehäuses. Am Einlassende (Zone I) wurde das hydrierte Rapsöl (HMF) als Pulver in den Extruder zu 25 bis 40 kg/h, z.B.35 kg/h dosiert, der zweite Abschnitt (Zone II) war auf oberhalb der Schmelztemperatur des hydrierten Rapsöls temperiert, das niedrigschmelzende Fett (LMF) wurde auf 40 bis 45 °C temperiert und flüssig mittels einer Dosierpumpe in den zweiten Abschnitt dosiert (2,3 bis 6,8 kg/h), der dritte Abschnitt (Zone III) und der vierte Abschnitt (Zone IV) waren auf 0 °C temperiert, um die Masse auf eine Temperatur von ca. 17 bis 28 °C, gemessen unmittelbar am Extruderaustritt, zu kühlen und unmittelbar anschließend durch eine Düsenplatte mit Öffnungen mit 2 mm Durchmesser, alternativ 0,5 oder 1 mm Durchmesser, zu pressen und die austretenden festen Stränge mit einem rotierenden Messer zu schneiden. Das Rote Beete-Pulver (RBP) wurde mit dem hydrierten Rapsöl in das Einlassende dosiert, oder separat in den ersten Abschnitt.

Die Schnecke wurde zu 100 Upm angetrieben, das rotierende Messer hatte 6 Schneiden, die bei 1200 Upm drehten.

Die aus der Düsenplatte ausgetretene Mischung war fest, konnte in formstabile Pellets geschnitten werden und erforderte keine weitere Kühlung, sondern war bei Raumtemperatur formstabil.

Vor Beginn der in-vitro-Verdauung wurden 14 g Pellets mit destilliertem Wasser für 2 min gespült, um auf der Oberfläche vorhandenes Rote Beete Pulver abzuspülen und somit die Verkapselungseffizienz in Form der Freisetzung von Rote Beete Pulver aus Pellets mittels photometrischer Bestimmung ermitteln zu können. Der in-vitro Test wurde in Anlehnung an Brodkorb et al, Nature Protocols 2019 durchgeführt. Der in-vitro Test umfasst zunächst eine 3-minütige orale Phase, in der die zuvor gespülten 14 g Pellets mit 14 mL synthetischem Speichel mit pH 7 (SSF) im Reaktor des semi-dynamischen Titrationsgeräts bei 37 °C inkubiert werden. Für die Einleitung der gastrischen Phase werden 17 mL synthetischer Magensaft mit pH 3 sowie Pepsin, gelöst in 3 mL SGF mit pH 4,5, dem oralen Gemisch beigefügt und für 2 h bei 37 °C inkubiert. Nach Ende der gastrischen Phase werden 20 mL des gastrischen Gemisches (die Hälfte der Partikel und die Hälfte der Flüssigkeit) mit 17 mL synthetischer Intestinalflüssigkeit (SDF) mit pH 7 sowie Pancreatin, gelöst in 3 mL SDF, und Gallensalzen (CAS Nr. 8008-63-7, Produkt Nr. SC-214601, erhältlich von Santa Cruz Bioltechnology, Heidelberg) gemischt und für 2 h bei 37 °C inkubiert. Der pH-Wert während der semi-dynamischen Verdauung wird computergesteuert durch die Zugabe von Säure und Base auf pH 7 in der oralen Phase, in der gastrischen Phase für 10 min auf pH 3,2, für 20 min auf pH 2,8, für 40 min auf pH 1,8, für 60 min auf pH 1,7 und für 120 min auf pH 1,5 und während der intestinalen Phase für 120 min auf pH 6,5 eingestellt. Der Wechsel zwischen den einzelnen Verdauungsphasen wird manuell durchgeführt.

Die Freisetzung des Inhaltsstoffs, stellvertreten durch das Rote Beete-Pulver, wurde nach oberflächlichem Waschen von Pellets, um loses Pulver zu entfernen, in in vitro Tests bestimmt. Die Freisetzung wurde photometrisch in der freien Lösung bestimmt.

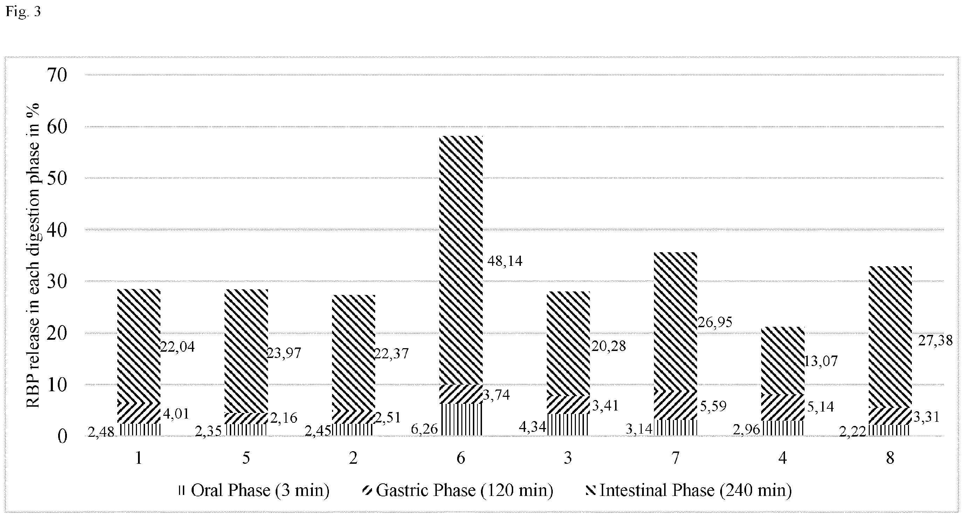

Die Fig. 2 zeigt die Freisetzung des Modellinhaltsstoffs Rote Beete für 12% Rapsöl (1), 12 % Palmkernfett (2), 12 % Kokosfett mit Schmelzpunkt 22-26 °C (3), 12 % Kokosfett mit Schmelzpunkt 23-26 °C (4), 16 % Rapsöl (5), 16 % Palmkernfett (6), 16 % Kokosfett mit Schmelzpunkt 22-26 °C (7), 16 % Kokosfett mit Schmelzpunkt 24-26 °C (8) ist in Fig. 2 über die Zeit des in vitro Verdaus gezeigt, in Fig. 3 ist die Gesamtfreisetzung im Anschluß an die in vitro Verdaus gezeigt.

Dieses Ergebnis zeigt, dass die Pellets eine verzögerte Freisetzung des Großteils an Rote Beete Pulver von bis zu 48% in der Intestinalen Phase (Resorptionsort) ergeben, während sie in der oralen und gastrischen Phase eine geringe Freisetzung zeigen bzw. stabil sind und die verkapselte Komponente vor saurem Magensaft schützen.

Die Fettmischung mit 16% niedrigschmelzendem Palmkernfett ist besonders vorteilhaft, da der Anteil an freigesetztem rote Beete Pulver in intestinaler Phase nahezu doppelt so hoch ist im Vergleich zu Fettkapseln mit Rapsöl oder einem der Kokosfette. Auch ist bei den Pellets mit Palmkernfett eine gute Stabilität und ein guter Schutz während der oralen und gastrischen Phase gefunden worden.

Insgesamt zeigen die Ergebnisse, dass erfindungsgemäß hergestellte Pellets aus mit Fett verkapseltem Inhaltsstoff insbesondere mit einem Anteil an niedrig-schmelzendem Fett eine gezielte Freisetzung des Inhaltsstoffs im Dünndarm erlauben.

## Patentansprüche

1. Verfahren zur Herstellung von mit Fett verkapseltem Inhaltsstoff, das die Schritte
a) Dosieren von Fett, das einen Schmelzpunkt von zumindest 50°C aufweist, in einen Extruder,
b) Erwärmen des Fetts in dem Extruder bei Drehung der zumindest einen Schnecke auf zumindest die Schmelztemperatur des Fetts,
c) Zudosieren zumindest eines Inhaltsstoffs in das Extrudergehäuse zur Herstellung einer fließfähigen Mischung,
d) Kühlen der fließfähigen Mischung in einem stromabwärts angrenzenden Abschnitt des Extrudergehäuses auf eine Temperatur, die in einem Bereich von zumindest 10 K unterhalb der Schmelztemperatur der Mischung liegt,
e) anschließendes Austreten der Mischung durch eine Extruderdüse,
f) Zerkleinern der Mischung nach Austritt aus der Extruderdüse, aufweist.

2. Verfahren nach Anspruch 1, **gekennzeichnet durch** das Zerkleinern des Inhaltsstoffs in einem am Einlassende angeordneten Abschnitt eines Extruders, der zum Zerkleinern von Feststoffen eingerichtet ist, und durch das Mischen des Fetts mit dem Inhaltsstoff, das Extrudieren der Mischung mit Erwärmen und das anschließende Kühlen der fließfähigen Mischung in einem gemeinsamen Extruder erfolgt.

3. Verfahren nach einem der voranstehenden Ansprüche, **dadurch gekennzeichnet, dass** vor dem Dosieren des Fetts in den Extruder der Inhaltsstoff mit dem Fett gemischt wird und eine Mischung, die das Fett und den Inhaltsstoff enthält, in den Extruder dosiert wird.

4. Verfahren nach einem der voranstehenden Ansprüche, **dadurch gekennzeichnet, dass** nach dem Erwärmen des Fetts, das einen Schmelzpunkt von zumindest 50 °C aufweist, auf zumindest seine Schmelztemperatur in Schritt b) und vor dem Kühlen von Schritt d) zusätzlich ein niedrigschmelzendes Fett, das einen Schmelzpunkt von maximal 40 °C aufweist, zu maximal 20 Gew.-% der Fette in den Extruder dosiert wird.

5. Verfahren nach einem der voranstehenden Ansprüche, **dadurch gekennzeichnet, dass** in Schritt d) das Kühlen erfolgt, bis die Mischung nach Austritt aus der Extruderdüse eine Temperatur aufweist, die im Bereich von 50 K bis 10 K unterhalb der Schmelztemperatur der Mischung liegt.

6. Verfahren nach einem der voranstehenden Ansprüche, **dadurch gekennzeichnet, dass** die Pellets anschließend an Schritt f) durch h) Temperieren auf eine Temperatur von zumindest 2 bis 10 K unterhalb der Schmelztemperatur des Fetts und zumindest 50 °C für zumindest 1 d behandelt werden.

7. Verfahren nach Anspruch 6, **dadurch gekennzeichnet, dass** die Pellets vor dem Temperieren in Schritt h) in luftdichte Verpackungen abgefüllt werden.

8. Verfahren nach einem der voranstehenden Ansprüche, **dadurch gekennzeichnet, dass** die Mischung des mit Fett verkapselten Inhaltsstoffs zumindest 5 Gew.-% Inhaltsstoff enthält.

9. Verfahren nach einem der voranstehenden Ansprüche, **dadurch gekennzeichnet, dass** das Fett hydriertes Pflanzenfett, hydriertes tierisches Fett oder eine Mischung von zumindest zweien dieser ist, das eine Schmelztemperatur von zumindest 40 °C aufweist.

10. Verfahren nach einem der voranstehenden Ansprüche, **dadurch gekennzeichnet, dass** der Inhaltsstoff bei der Temperatur, auf die die Mischung in Schritt b) erwärmt wird, fest ist.

11. Verfahren nach einem der voranstehenden Ansprüche, **dadurch gekennzeichnet, dass** der Inhaltsstoff bei der Temperatur, auf die das Fett oder die Mischung erwärmt wird, flüssig ist.

12. Verfahren nach einem der voranstehenden Ansprüche, **dadurch gekennzeichnet, dass** der Inhaltsstoff ein Feststoff oder eine mit Wasser mischbare Lösung, flüssige Emulsion oder Suspension ist.

13. Verfahren nach einem der voranstehenden Ansprüche, **dadurch gekennzeichnet, dass** das Fett aus zumindest einem hydrierten Pflanzenfett besteht.

14. Pellets zur Verwendung als Inhaltsstoff für Lebensmittel, wobei in den Pellets der Inhaltsstoff mit Fett verkapselt ist, insbesondere erhältlich nach einem Verfahren gemäß einem der voranstehenden Ansprüche, **dadurch gekennzeichnet, dass** das Fett eine Mischung eines Fetts, das einen Schmelzpunkt von zumindest 50°C aufweist, mit einem niedrigschmelzenden Fett ist, das einen Schmelzpunkt von maximal 40 °C aufweist und zu 10 bis 20 Gew.-% der Summe der Fette enthalten ist.

15. Pellets nach Anspruch 14, **dadurch gekennzeichnet, dass** das Fett, das einen Schmelzpunkt von zumindest 50°C aufweist, einen Schmelzbereich von 60 bis 90 °C, bevorzugter 60 bis 70 °C, aufweist und durch vollständiges Hydrieren gehärtetes Rapsöl, Rübenöl, Sonnenblumenöl, Palmöl, Palmkernfett, Palmkernöl, Rizinusöl, Maiskaimöl, Erdnussöl, Sojaöl, Weizenkeimöl, Olivenöl, Fischöl, Milchfett, jeweils vollständig hydriert, oder eine Mischung aus zumindest zweien dieser ist und das niedrigschmelzende Fett nicht hydriert ist und Kokosfett, Palmkernfett, Palmfett, Milchfett, Rapsöl, Olivenöl, Leinöl, Sonnenblumenöl, Hanföl, Erdnussöl, Walnussöl, Weizenkeimöl, Palmöl, Palmkernöl, Distelöl, Sesamöl, Baumwollsamenöl oder eine Mischung von zumindest zweien dieser ist.
